# EUROPEAN PATENT SPECIFICATION

(11) **EP 3 355 660 B1**
(45) Date of publication and mention of the grant of the patent: **16.09.2020**
(21) Application number: 18152747.4
(22) Date of filing: 22.01.2018
(51) Int. Cl.: H05B 3/20, B64D 15/12

(54) **CARBON ALLOTROPE HEATERS WITH MULTIPLE INTERDIGITATED ELECTRODES**
KOHLENSTOFFALLOTROP-HEIZAGGREGATE MIT MEHREREN INEINANDERGREIFENDEN ELEKTRODEN
ÉLÉMENTS CHAUFFANTS ALLOTROPES DE CARBONE AVEC DE MULTIPLES ÉLECTRODES INTERDIGITÉES

(30) Priority: 26.01.2017 US 201715416743
(43) Date of publication of application: 01.08.2018
(73) Proprietor: Goodrich Corporation, Charlotte, NC 28217-4578 (US)
(72) Inventor: HU, Jin, Hudson, OH 44236 (US); SLANE, Casey, Richwood, OH 43344 (US); CHING, Nathaniel, Uniontown, OH 44685-8457 (US); BOTURA, Galdemir Cezar, Akron, OH 44313 (US)
(74) Representative: Dehns

(56) References cited:
- WO-A1-2016/126827
- WO-A1-2016/144683
- US-A1- 2010 170 889
- US-A1- 2012 055 918
- US-B1- 7 053 344

## Description

### BACKGROUND

Nano-carbon allotropes, such as carbon nanotubes (CNTs), graphene, and nano-carbon fibers, have a variety of uses in nanotechnology, electronics, optics and other material sciences. Nano-carbon allotropes are both thermally and electrically conductive. Further, due to their much lighter mass, substituting nano-carbon allotropes for metal heating components can reduce the overall weight of a heating component significantly. This makes the use of nano-carbon allotropes of particular interest for applications where weight is critical, such as in aerospace and aviation technologies.

Nano-carbon allotropes are available in various concentrations for creating carbon allotrope heaters. The range of available concentrations is limited, however, and results in a limited range of resistances for ice protection systems that use carbon allotrope heaters. This limited range of resistances directly impacts the performance of carbon allotrope heaters in ice protection operations; such limited resistance does not allow ideal heat output from the carbon allotrope heaters. Thus, many commercially available carbon allotrope materials cannot currently be used as a substitute for metal heating elements.

US 2012/055918 A1 discloses a heating element according to the preamble of claim 1.

### SUMMARY

A heating element (e.g. made by the method herein described) includes an electrode array having first and second interdigitated electrodes. The first electrode is configured to have a first polarity, and the second electrode is configured to have a second polarity. The electrode array substantially encloses a plurality of regions. The heating element further includes a heating surface including a layer of a carbon allotrope material having a first electrical resistance. The electrode array is in electrical communication with the carbon allotrope material. The layer of carbon allotrope material includes a carbon nanotube nonwoven sheet material. The interdigitated electrodes are formed from a carbon allotrope material that is more conductive than the carbon allotrope layer of the heating surface.

A method of making a heating element (e.g. as herein described) includes forming a heating surface from at least one layer of a carbon allotrope material having a first electrical resistance, and forming an electrode array from first and second interdigitated electrodes. The first electrode is configured to have a first polarity, and the second electrode is configured to have a second polarity. The layer of carbon allotrope material includes a carbon nanotube nonwoven sheet material. The method further includes placing the electrode array in electrical communication with the carbon allotrope material, and enclosing a plurality of regions containing the carbon allotrope material with the electrode array. The interdigitated electrodes are formed from a carbon allotrope material that is more conductive than the carbon allotrope layer of the heating surface.

### BRIEF DESCRIPTION OF THE DRAWINGS

FIGS. 1A and 1B are schematic views of a heating element.
FIGS. 2A-2D are enlarged views of alternative embodiments of the heating element.
FIGS. 3-7 are schematic views of alternative embodiments of the heating element.
FIG. 8 is a cross-sectional view of an alternative embodiment of the heating element.

### DETAILED DESCRIPTION

The present disclosure provides a carbon allotrope heating element having acceptable electrical resistances for use in aircraft ice protection applications. The carbon allotrope heating element having the disclosed resistances can replace conventional metal alloy or other heating elements.

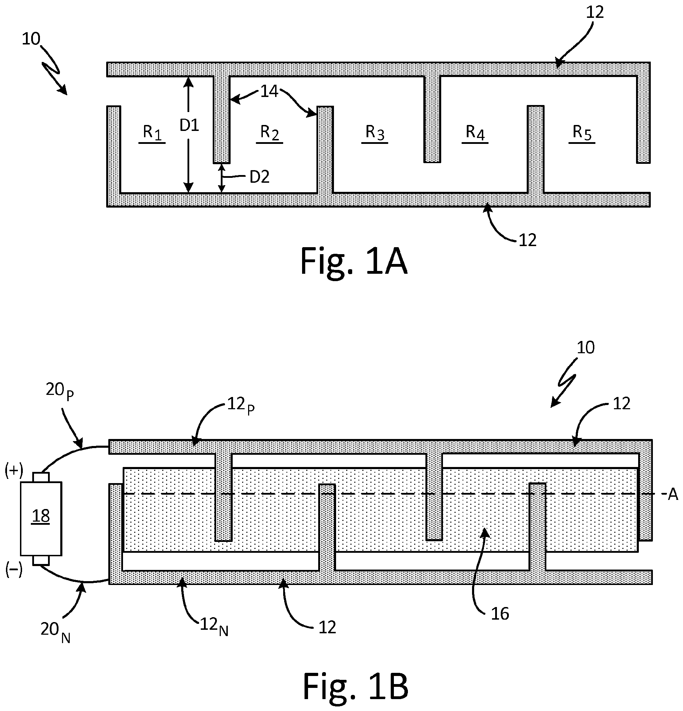

FIGS. 1A and 1B are schematic views of heating element 10. FIG 1A shows interdigitated electrodes 12. Interdigitated electrodes 12 include finger-like projections 14 having an interlocking arrangement that partially encloses regions R₁-R₅. As shown in FIG. 1B, heating element 10 further includes carbon allotrope layer 16 within regions R₁-R₅. The embodiment of FIGS. 1A and 1B includes five regions (R₁-R₅), however, it should be understood that heating element 10 can include any number of regions (R₁-R_{N}).

Carbon allotrope layer 16 includes carbon nanotubes (CNTs). The CNTs are in sheet form, i.e. as a carbon nanotube nonwoven sheet material (CNT-NSM). Carbon nanotube sheets are generally manufactured as a flat sheet or tape that is very thin, as thin as or thinner than the thickness of an ordinary sheet of paper (about 0.07 to 0.18 millimeters). Some CNT sheets have a thickness as small as about 127 µm (0.5 mils). CNT-NSMs do not typically include adhesives, resins or polymers and CNTs present in the sheet are held together by Van der Waals forces. Van der Waals forces are non-covalent and non-ionic attractive forces between CNTs caused by fluctuating polarizations of the CNTs. Individual CNTs can align themselves by pi-stacking, one type of Van der Waals interaction. Pi-stacking refers to attractive, non-covalent interactions between aromatic rings that occur due to the presence of pi bonds. As each carbon ring within a CNT possesses pi bonds, pi-stacking occurs between nearby CNTs. "Dry" CNT sheets (those having no adhesives, resins or polymers) generally have a uniform electrical resistance.

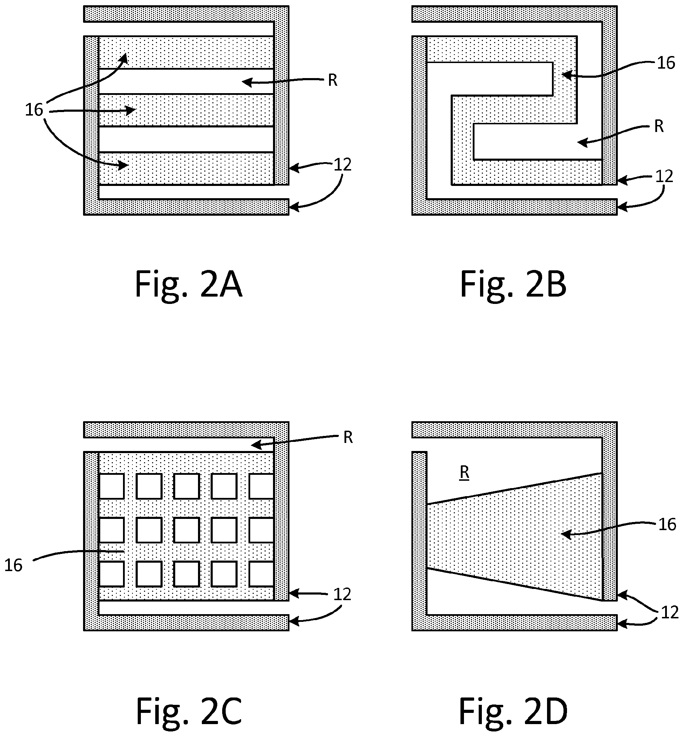

Carbon allotrope layer 16 can include a single sheet of a carbon allotrope material disposed along the length of heating element 10, or a plurality of individual sheets located within the plurality of regions (not shown). The plurality of individual sheets can be in communication with one another, or spaced apart some distance from one another. In other embodiments (shown in FIGS. 2A-2D), the sheet or sheets of carbon allotrope layer 16 can include different shapes or patterns.

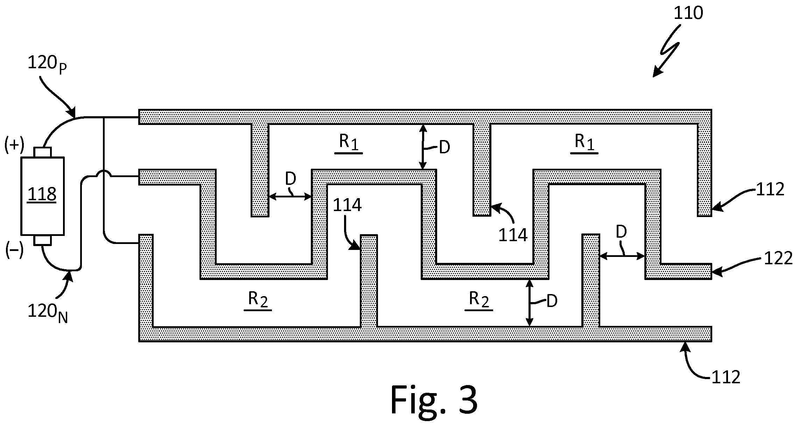

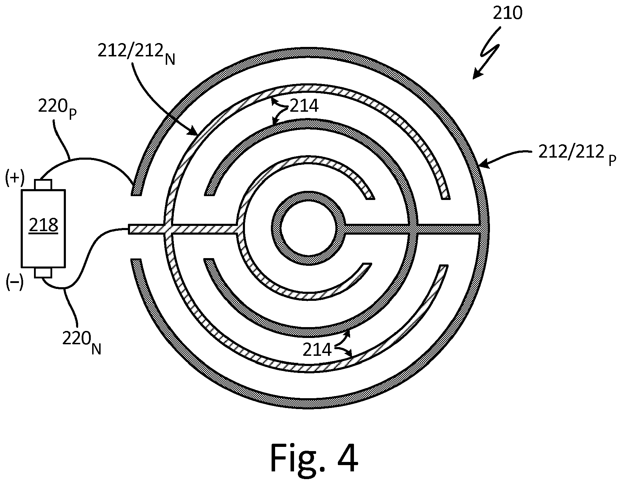

Interdigitated electrodes 12 are spaced apart some distance from one another. In the embodiment shown in FIG. 1A, the distance between interdigitated electrodes 12 varies, such that distance D1 between interdigitated electrodes 12 at region R₁, for example, is greater than distance D2 between the tip of a finger-like projection 14 of one of the interdigitated electrodes 12 and the adjacent electrode. In other embodiments, such as those shown in FIGS. 3 and 4, the distance between adjacent electrodes is generally uniform.

Interdigitated electrodes 12 are formed from a carbon allotrope material that is more conductive (having a lower resistivity) than carbon allotrope layer 16. For example, interdigitated electrodes 12 can include a CNT-filled thermoplastic film having a higher concentration of CNTs than is found within carbon allotrope layer 16.

Heating element 10, as shown in FIG 1B, is powered by power source 18. Power source 18 can include positive (+) and negative (-) terminals. One of the interdigitated electrodes 12 can be connected via connector 20_{P} to the positive terminal to become positive electrode 12_{P}. The other of the interdigitated electrodes 12 can be connected to the negative terminal via connector 20_{N} to become negative electrode 12_{N}. Current flows through positive electrode 12_{P} across regions R₁-R₅ containing carbon allotrope layer 16, and into negative electrode 12_{N}. Regions R₁-R₅ containing carbon allotrope layer 16 act as resistors such that when current passes through them, heat is generated (i.e. Joule heating). Carbon allotrope layer 16 therefore acts as a heating surface.

Regions R₁-R₅ of heating element 10 act as parallel resistors. With parallel resistors, the total resistance (R_{T}) of a circuit-in this case, heating element 10-is calculated based on the sum of the inverse of each individual resistor, such that 1/R_{T} = 1/R₁ + 1/R₂ ...+ 1/R_{N}. Due to this relationship, the total resistance R_{T} will always be less than that of any individual resistor, and R_{T} will decrease with each resistor added to the circuit. Thus, the disclosed heating element can achieve total resistances within the requisite resistance ranges to provide aircraft heating and ice protection, despite the fact that the off-the-shelf sheet resistances of many nano-carbon allotropes are too high for such applications.

FIGS. 2A-2D are enlarged views of a region of heating element 10 illustrating some examples of the shapes of carbon allotrope layer 16 that can be used. FIG. 2A shows carbon allotrope layer 16 as a plurality of strips of carbon allotrope material within a region R of heating element 10. In FIG. 2B, carbon allotrope layer 16 has a serpentine shape. In FIG. 2C, carbon allotrope layer 16 has a grid-type shape. In FIG. 2D, carbon allotrope layer 16 is tapered. Similar to the embodiment of FIG. 1B, carbon allotrope layer 16 of FIGS. 2A-2D can be a single, continuous sheet, or a plurality of sheets. An embodiment of a heating element can include a single shape of carbon allotrope layer 16, or a combination of different shapes.

The shape of carbon allotrope layer 16 can be selected based on the heating needs at a particular location on the aircraft. Generally speaking, the greater the area of region R that is covered by carbon allotrope layer 16, the lower the resistance of heating element 10 will be. For example, due to the shape of carbon allotrope layer 16 in the embodiment of FIG. 1B, heating element 10 will have a lower resistance than the regions shown in the embodiments of FIGS. 2A-2D. Similarly, in FIG. 2D, the resistance from top to bottom across region R will be higher at the narrowest part (left side) of carbon allotrope layer 16 than it is at the widest part (right side) of carbon allotrope layer 16.

In another embodiment, heating element 10 can include a second carbon allotrope layer (not shown) over carbon allotrope layer 16. Other embodiments can include more than two carbon allotrope layers. Much the same as carbon allotrope layer 16, the additional layers can be a single, continuous sheet, or a plurality of individual sheets. Adding additional carbon allotrope layers can create more robust heating in the area of heating element 10 because more heat will be generated as current passes through the increased amount of carbon allotrope material.

FIG. 3 shows heating element 110, which includes a pair of interdigitated electrodes 112 separated by serpentine electrode 122. In the embodiment of FIG. 3, the distance D between adjacent electrodes is generally uniform throughout heating element 110. Interdigitated electrodes 112 are connected, via connector 120p, to the positive (+) terminal of power source 118. Serpentine electrode 122 is connected, via connector 120_{N}, to the negative (-) terminal of power source 118. When the power is switched on, current flows through each of the interdigitated electrodes 112, across regions R₁ and R₂ to serpentine electrode 122.

In the embodiment of FIG. 3, as well as the other embodiments of the disclosed heating element, the polarity of the electrodes can be varied. That is, any of the disclosed electrodes can serve as either the positive or negative electrode, depending on its connection to the power source.

In the embodiment of FIG. 3, carbon allotrope layer 116 is not shown, but can be disposed along the length of heating element 110 in regions R₁ and R₂ such that it would be in electrical communication with interdigitated electrodes 112 and serpentine electrode 122. Like the other embodiments of the disclosed heating element, carbon allotrope layer 116 can include a single, continuous sheet, or a plurality of sheets. Heating element 110 can also include a plurality of carbon allotrope layers.

FIG. 4 shows heating element 210 including a pair of arcuate electrodes 212. Arcuate electrodes 212 include generally-interlocking arcuate finger-like projections 214. Like other embodiments of the disclosed heating element, one of the arcuate electrodes 212 is connected to the positive (+) terminal of power source 218 via connector 220_{P} to become positive electrode 212_{P}. The other arcuate electrode 212 is connected to the negative (-) terminal of power source 218 via connector 220_{N} to become negative electrode 212_{N}. Due to its shape, heating element 210 is particularly well-suited for an aircraft surface or component having a similar shape, such as a sensor.

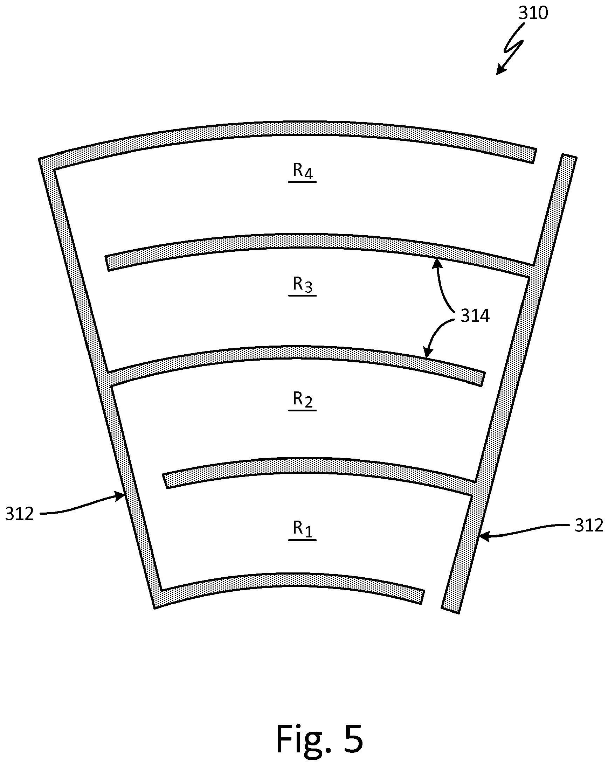

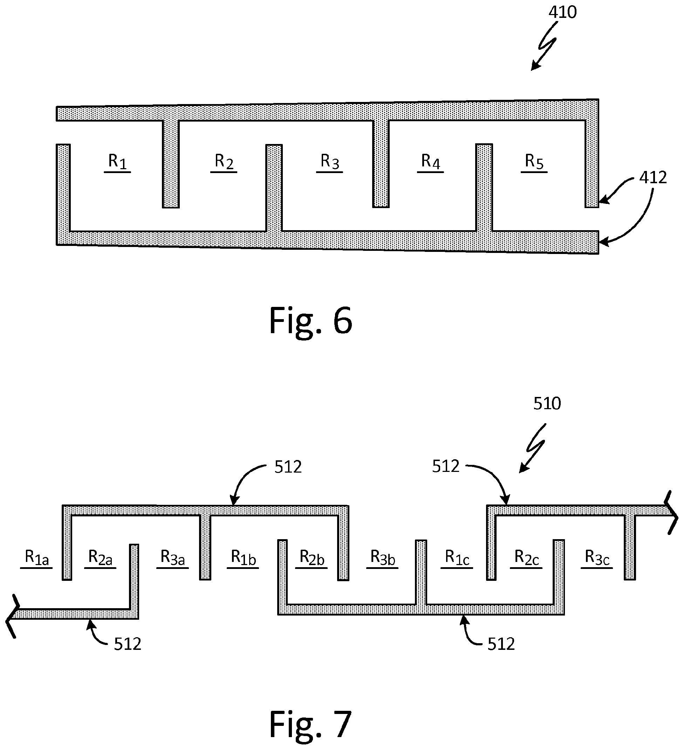

FIGS. 5-7 are schematic views of alternative embodiments of the disclosed heating element. FIG. 5 shows heating element 310 with interdigitated electrodes 312 having slightly curved finger-like projections 314. Similar to the circular electrodes 212, heating element 310 can be used on an aircraft having a similarly curved geometry. FIG. 6 shows heating element 410 having tapered electrodes 412. Such a configuration can be used to compensate for any voltage drop that might occur in the various heating elements disclosed, specifically the longer embodiments. It can also be used to tailor the amount of current flowing through the electrodes at specific locations. FIG. 7 shows heating element 510 with a plurality of staggered interdigitated electrodes 512.

In the embodiments of FIGS. 4-7 discussed above, the respective carbon allotrope layers are not shown, but can include a single sheet, or a plurality of sheets, as well as a plurality of carbon allotrope layers disposed within the regions R₁-R_{N}. The carbon allotrope layer or layers of each of the embodiments of FIGS. 4-7 can be in electrical communication with the plurality of interdigitated electrodes.

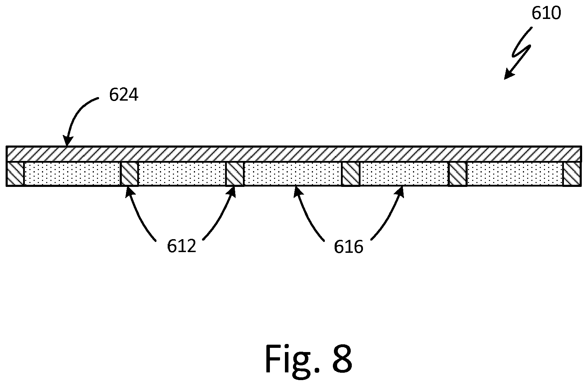

FIG. 8 is a cross-sectional view of heating element 610, as viewed along axis A shown in FIG. 1B. Heating element 610 includes interdigitated electrodes 612 and carbon allotrope layer 616. In this embodiment, protective layer 624 is attached to heating element 610. Protective layer 624 can include any toughened material, such as a metal, alloy, or rubber-type material.

In each of the embodiments of the disclosed heating element, the spacing between electrodes of opposite polarity can be varied to achieve different resistances. This applies for embodiments having variable or uniform electrode spacing. Generally speaking, resistance and electrode spacing are proportional, such that increasing the distance between adjacent electrodes increases the resistance, while decreasing the distance between electrodes decreases the resistance.

The power source (18, 118, 218) of the disclosed heating element can vary, because different aircraft types have varying types of power sources available for running ice protection systems. For example, small aircraft and unmanned aerial vehicles (UAVs) typically use 28 volt (V) direct current (DC) power. Helicopters often use 115 V alternating current (AC) power or 270 V DC power, and commercial turbofan and turboprop aircraft typically use 115 V AC power, 230 V AC power or 208 V DC power. More Electric Aircraft (MEA) concepts have also explored using 270 V DC power and 540 DC power.

A method of forming the disclosed heating element includes forming a heating surface from at least one layer of a carbon allotrope material and forming an electrode array from first and second interdigitated electrodes. The first electrode is configured to have a first polarity and the second electrode is configured to have a second polarity. The electrode array is placed in electrical communication with the carbon allotrope material. Heating element 10 can then be cured using an autoclave or out-of-autoclave (OOA) manufacturing process, and attached to an aircraft surface using a commercially available or other adhesive.

In the embodiments of heating element 10 in which carbon allotrope layer 16 is a single, continuous sheet, interdigitated electrodes 12 can be attached in several ways. Interdigitated electrodes 12 can be printed directly onto the carbon allotrope layer 16, as a carbon allotrope ink. Interdigitated electrodes 12 can also be formed independently and adhered to carbon allotrope layer 16 with using an adhesive material.

Heating element 10 has several benefits. First, the components can be tailored to achieve many different heat distributions and power densities. As discussed above, this includes altering the shape and thickness of the carbon allotrope material, as well as the shape, spacing, and number of electrodes used. The various embodiments of heating element 10 can achieve the resistances required for electro-thermal ice protection, as well as other heating applications, such as wind turbines, heated floor panels, local comfort heating applications, area heating, water tank heating blankets and other aerospace heating applications.

Another benefit of the heating element is that carbon allotrope materials are lightweight and have a lighter thermal mass, making them very efficient at converting energy to heat.

### Discussion of Possible Embodiments

The following are non-exclusive descriptions of possible embodiments of the present invention.

A heating element (e.g. made by the method herein described) includes an electrode array having first and second interdigitated electrodes. The first electrode is configured to have a first polarity, and the second electrode is configured to have a second polarity. The electrode array substantially encloses a plurality of regions. The heating element further includes a heating surface including a layer of a carbon allotrope material having a first electrical resistance. The electrode array is in electrical communication with the carbon allotrope material. The layer of carbon allotrope material includes a carbon nanotube nonwoven sheet material. The interdigitated electrodes are formed from a carbon allotrope material that is more conductive than the carbon allotrope layer of the heating surface.

The heating element of the preceding paragraph can optionally include, additionally and/or alternatively, any one or more of the following features, configurations and/or additional components:
Each plurality of regions contains the carbon allotrope material, and the carbon allotrope material is configured to act as a resistor.

The heating element has a total resistance less than the first resistance.

The total resistance ranges from about 0.005 Ω/sq to about 3.0 Ω/sq.

A shape of the heating surface is selected from the group consisting of straight sheets, strips, a grid-type pattern, a serpentine pattern, a tapered pattern, and combinations thereof.

The heating element further includes a second layer of carbon allotrope material.

The electrode array comprises a third electrode, and the third electrode has a polarity opposite the polarity of the second electrode.

A shape of the electrodes is selected from the group consisting of straight, curved, serpentine, tapered, circular, and combinations thereof.

A method of making a heating element (e.g. as herein described) includes forming a heating surface from at least one layer of a carbon allotrope material, having a first electrical resistance, and forming an electrode array from first and second interdigitated electrodes. The first electrode is configured to have a first polarity, and the second electrode is configured to have a second polarity. The layer of carbon allotrope material includes a carbon nanotube nonwoven sheet material. The method further includes placing the electrode array in electrical communication with the carbon allotrope material, and enclosing a plurality of regions containing the carbon allotrope material with the electrode array. The interdigitated electrodes are formed from a carbon allotrope material that is more conductive than the carbon allotrope layer of the heating surface.

The method of the preceding paragraph can optionally include, additionally and/or alternatively, any one or more of the following features, configurations and/or additional components:
The method includes curing the heating element.

The method includes configuring the carbon allotrope material as a resistor.

The method includes adding a second layer of carbon allotrope material to the heating element.

The method includes adding a third electrode to the electrode array, the third electrode having a polarity opposite the polarity of the second electrode.

The method includes attaching a protective layer to the heating element.

The method includes connecting the heating element to a power source.

The method includes lowering a total resistance of the heating element to a value lower than the first resistance.

The method includes attaching the heating element to an aircraft surface.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A heating element (10) comprising:
an electrode array comprising first and second interdigitated electrodes (12);
wherein the first electrode (12_{P}) is configured to have a first polarity;
wherein the second electrode (12_{N}) is configured to have a second polarity; and
wherein the electrode array substantially encloses a plurality of regions (R1,R2,R3,R4,R5); and
a heating surface comprising at least one layer (16) of a carbon allotrope material, the carbon allotrope material having a first electrical resistance;
wherein the electrode array is in electrical communication with the carbon allotrope material;
the heating element being **characterised in that** said layer of carbon allotrope material comprises a carbon nanotube nonwoven sheet material, and **in that** the interdigitated electrodes are formed from a carbon allotrope material that is more conductive than the carbon allotrope layer of the heating surface.

2. The heating element of claim 1, wherein each of the plurality of regions contains the carbon allotrope material, and said carbon allotrope material is configured to act as a resistor.

3. The heating element of claim 1 or claim 2, wherein the heating element has a total resistance less than the first resistance, and/or
wherein the total resistance ranges from about 0.005 Ω/sq to about 3.0 Ω/sq.

4. The heating element of any preceding claim, wherein a shape of the heating surface is selected from the group consisting of straight sheets, strips, a grid-type pattern, a serpentine pattern, a tapered pattern, and combinations thereof, and/or wherein a shape of the electrodes is selected from the group consisting of straight, curved, serpentine, tapered, circular, and combinations thereof.

5. The heating element of any preceding claim, wherein the heating surface further comprises a second layer of carbon allotrope material.

6. The heating element of any preceding claim, wherein the electrode array comprises a third electrode, and wherein the third electrode has a polarity opposite the polarity of the second electrode.

7. A method of making a heating element (10) comprising:
forming a heating surface from at least one layer (16) of a carbon allotrope material,
the carbon allotrope material having a first electrical resistance;
forming an electrode array from first and second interdigitated electrodes (12);
configuring the first electrode (12_{P}) to have a first polarity;
configuring the second electrode (12_{N}) to have a second polarity;
placing the electrode array in electrical communication with the carbon allotrope material; and
enclosing, with the electrode array, a plurality of regions (R1,R2,R3,R4,R5) containing the carbon allotrope material,
wherein said layer of carbon allotrope material comprises a carbon nanotube nonwoven sheet material, and
wherein the interdigitated electrodes are formed from a carbon allotrope material that is more conductive than the carbon allotrope layer of the heating surface.

8. The method of claim 7, further comprising: curing the heating element.

9. The method of claim 7 or claim 8, further comprising: configuring the carbon allotrope material of the heating surface as a resistor.

10. The method of any one of claims 7 to 9, further comprising: adding a second layer of carbon allotrope material to the heating element.

11. The method of any one of claims 7 to 10, further comprising: adding a third electrode to the electrode array, wherein the third electrode has a polarity opposite the polarity of the second electrode.

12. The method of any one of claims 7 to 11, further comprising: attaching a protective layer to the heating element, and/or further comprising: connecting the heating element to a power source (18).

13. The method of any one of claims 7 to 12, further comprising: lowering a total resistance of the heating element to a value lower than the first resistance.

14. The method of any one of claims 7 to 13, further comprising: attaching the heating element to an aircraft surface.

## Patentansprüche

1. Heizelement (10), Folgendes umfassend:
eine Elektrodenanordnung, die eine erste und eine zweite ineinandergreifende Elektrode (12) umfasst;
wobei die erste Elektrode (12_{P}) dazu konfiguriert ist, eine erste Polarität aufzuweisen;
wobei die zweite Elektrode (12_{N}) dazu konfiguriert ist, eine zweite Polarität aufzuweisen; und
wobei die Elektrodenanordnung im Wesentlichen eine Vielzahl von Regionen (R1, R2, R3, R4, R5) umschließt; und
eine Heizoberfläche, die mindestens eine Schicht (16) eines Kohlenstoffallotropmaterials umfasst, wobei das Kohlenstoffallotropmaterial einen ersten elektrischen Widerstand aufweist;
wobei die Elektrodenanordnung in elektrischer Verbindung mit dem Kohlenstoffallotropmaterial ist;
wobei das Heizelement **dadurch gekennzeichnet ist, dass**
die Schicht aus Kohlenstoffallotropmaterial einen Vliesstoff aus Kohlenstoffnanoröhren umfasst, und
dadurch dass
die ineinandergreifenden Elektroden aus einem Kohlenstoffallotropmaterial gebildet sind, das leitfähiger ist als die Kohlenstoffallotropschicht der Heizoberfläche.

2. Heizelement nach Anspruch 1, wobei jede aus der Vielzahl von Regionen das Kohlenstoffallotropmaterial enthält und das Kohlenstoffallotropmaterial dazu konfiguriert ist, als Widerstand zu fungieren.

3. Heizelement nach Anspruch 1 oder Anspruch 2, wobei das Heizelement einen Gesamtwiderstand aufweist, der niedriger ist als der erste Widerstand, und/oder
wobei der Gesamtwiderstand von ungefähr 0,005 Ω bis ungefähr 3,0 Ω reicht.

4. Heizelement nach einem der vorhergehenden Ansprüche, wobei eine Form der Heizoberfläche aus der Gruppe ausgewählt ist, die aus geraden Blechen, Streifen, einem gitterartigen Muster, einem Serpentinenmuster, einem sich verjüngenden Muster und Kombinationen davon besteht, und/oder wobei eine Form der Elektroden aus der Gruppe ausgewählt ist, die aus Folgendem besteht: gerade, gebogen, serpentinenförmig, sich verjüngend, kreisförmig und Kombinationen davon.

5. Heizelement nach einem der vorhergehenden Ansprüche, wobei die Heizoberfläche ferner eine zweite Schicht aus Kohlenstoffallotropmaterial umfasst.

6. Heizelement nach einem der vorhergehenden Ansprüche, wobei die Elektrodenanordnung eine dritte Elektrode umfasst und wobei die dritte Elektrode eine Polarität aufweist, die der Polarität der zweiten Elektrode entgegengesetzt ist.

7. Verfahren zum Herstellen eines Heizelements (10), Folgendes umfassend:
Bilden einer Heizoberfläche aus mindestens einer Schicht (16) eines Kohlenstoffallotropmaterials,
wobei das Kohlenstoffallotropmaterial einen ersten elektrischen Widerstand aufweist;
Bilden einer Elektrodenanordnung aus einer ersten und einer zweiten ineinandergreifenden Elektrode (12);
Konfigurieren der ersten Elektrode (12_{P}), sodass diese eine erste Polarität aufweist;
Konfigurieren der zweiten Elektrode (12_{N}), sodass diese eine zweite Polarität aufweist;
Platzieren der Elektrodenanordnung in elektrischer Verbindung mit dem Kohlenstoffallotropmaterial; und
Umschließen, mit der Elektrodenanordnung, einer Vielzahl von Regionen (R1, R2, R3, R4, R5), die das Kohlenstoffallotropmaterial enthalten,
wobei die Schicht aus Kohlenstoffallotropmaterial einen Vliesstoff aus Kohlenstoffnanoröhren umfasst, und
wobei die ineinandergreifenden Elektroden aus einem Kohlenstoffallotropmaterial gebildet sind, das leitfähiger ist als die Kohlenstoffallotropschicht der Heizoberfläche.

8. Verfahren nach Anspruch 7, ferner umfassend: Aushärten des Heizelements.

9. Verfahren nach Anspruch 7 oder Anspruch 8, ferner umfassend: Konfigurieren des Kohlenstoffallotropmaterials der Heizoberfläche als einen Widerstand.

10. Verfahren nach einem der Ansprüche 7 bis 9, ferner umfassend: Hinzufügen einer zweiten Schicht aus Kohlenstoffallotropmaterial zu dem Heizelement.

11. Verfahren nach einem der Ansprüche 7 bis 10, ferner umfassend: Hinzufügen einer dritten Elektrode zu der Elektrodenanordnung, wobei die dritte Elektrode eine Polarität aufweist, die der Polarität der zweiten Elektrode entgegengesetzt ist.

12. Verfahren nach einem der Ansprüche 7 bis 11, ferner umfassend: Anbringen einer schützenden Schicht an dem Heizelement und/oder ferner umfassend: Verbinden des Heizelements mit einer Leistungsquelle (18).

13. Verfahren nach einem der Ansprüche 7 bis 12, ferner umfassend: Senken eines Gesamtwiderstands des Heizelements auf einen Wert, der niedriger ist als der erste Widerstand.

14. Verfahren nach einem der Ansprüche 7 bis 13, ferner umfassend: Anbringen des Heizelements an einer Luftfahrzeugoberfläche.

## Revendications

1. Élément chauffant (10) comprenant :
un réseau d'électrodes comprenant des première et deuxième électrodes interdigitées (12) ;
dans lequel la première électrode (12_{P}) est configurée pour avoir une première polarité ;
dans lequel la deuxième électrode (12_{N}) est configurée pour avoir une seconde polarité ; et
dans lequel le réseau d'électrodes renferme sensiblement une pluralité de régions (R1, R2, R3, R4, R5) ; et
une surface chauffante comprenant au moins une couche (16) d'un matériau allotrope de carbone, le matériau allotrope de carbone ayant une première résistance électrique ;
dans lequel le réseau d'électrodes est en communication électrique avec le matériau allotrope de carbone ;
l'élément chauffant étant **caractérisé en ce que**
ladite couche de matériau allotrope de carbone comprend un matériau de feuille non tissée de nanotubes de carbone, et
**en ce que**
les électrodes interdigitées sont formées à partir d'un matériau allotrope de carbone qui est plus conducteur que la couche allotrope de carbone de la surface chauffante.

2. Élément chauffant selon la revendication 1, dans lequel chacune de la pluralité de régions contient le matériau allotrope de carbone, et ledit matériau allotrope de carbone est configuré pour agir comme une résistance.

3. Élément chauffant selon la revendication 1 ou la revendication 2, dans lequel l'élément chauffant a une résistance totale inférieure à la première résistance, et/ou
dans lequel la résistance totale est comprise entre environ 0,005 Ω/sq et environ 3,0 Ω/sq.

4. Élément chauffant selon une quelconque revendication précédente, dans lequel une forme de la surface chauffante est choisie dans le groupe composé de feuilles droites, de bandes, d'un motif de type grille, d'un motif en serpentin, d'un motif effilé et de leurs combinaisons, et/ou dans lequel une forme des électrodes est choisie dans le groupe composé des formes droite, courbe, en serpentin, effilée, circulaire et de leurs combinaisons.

5. Élément chauffant selon une quelconque revendication précédente, dans lequel la surface chauffante comprend en outre une seconde couche de matériau allotrope de carbone.

6. Élément chauffant selon une quelconque revendication précédente, dans lequel le réseau d'électrodes comprend une troisième électrode, et dans lequel la troisième électrode a une polarité opposée à la polarité de la deuxième électrode.

7. Procédé de fabrication d'un élément chauffant (10) comprenant :
la formation d'une surface chauffante à partir d'au moins une couche (16) d'un matériau allotrope de carbone,
le matériau allotrope de carbone ayant une première résistance électrique ;
la formation d'un réseau d'électrodes à partir de première et deuxième électrodes interdigitées (12) ;
la configuration de la première électrode (12_{P}) de sorte qu'elle ait une première polarité ;
la configuration de la deuxième électrode (12_{N}) de sorte qu'elle ait une seconde polarité ;
le placement du réseau d'électrodes en communication électrique avec le matériau allotrope de carbone ; et
l'encloisonnement, avec le réseau d'électrodes, d'une pluralité de régions (R1, R2, R3, R4, R5) contenant le matériau allotrope de carbone,
dans lequel ladite couche de matériau allotrope de carbone comprend un matériau de feuille non tissée de nanotubes de carbone, et
dans lequel les électrodes interdigitées sont formées à partir d'un matériau allotrope de carbone qui est plus conducteur que la couche allotrope de carbone de la surface chauffante.

8. Procédé selon la revendication 7, comprenant en outre : le durcissement de l'élément chauffant.

9. Procédé selon la revendication 7 ou la revendication 8, comprenant en outre : la configuration du matériau allotrope de carbone de la surface chauffante en tant que résistance.

10. Procédé selon l'une quelconque des revendications 7 à 9, comprenant en outre : l'ajout d'une seconde couche de matériau allotrope de carbone à l'élément chauffant.

11. Procédé selon l'une quelconque des revendications 7 à 10, comprenant en outre : l'ajout d'une troisième électrode au réseau d'électrodes, dans lequel la troisième électrode a une polarité opposée à la polarité de la deuxième électrode.

12. Procédé selon l'une quelconque des revendications 7 à 11, comprenant en outre : la fixation d'une couche protectrice à l'élément chauffant, et/ou comprenant en outre : le raccordement de l'élément chauffant à une source électrique (18).

13. Procédé selon l'une quelconque des revendications 7 à 12, comprenant en outre : la diminution d'une résistance totale de l'élément chauffant à une valeur inférieure à celle de la première résistance.

14. Procédé selon l'une quelconque des revendications 7 à 13, comprenant en outre : la fixation de l'élément chauffant à une surface d'aéronef.
